# EUROPÄISCHE PATENTSCHRIFT

(11) **EP 4 016 009 B1**
(45) Veröffentlichungstag und Bekanntmachung des Hinweises auf die Patenterteilung: **25.10.2023**
(21) Anmeldenummer: 20214985.2
(22) Anmeldetag: 17.12.2020
(51) Int. Cl.: G01D 5/30, G01D 11/30, G01V 8/00, G02B 7/00, G01V 8/10, G01V 8/12

(54) **OPTISCHER SENSOR**
OPTICAL SENSOR
CAPTEUR OPTIQUE

(43) Veröffentlichungstag der Anmeldung: 22.06.2022
(73) Patentinhaber: Leuze electronic GmbH + Co. KG, 73277 Owen/Teck (DE)
(72) Erfinder: Dümmel, Thomas, 72584 Hülben (DE)
(74) Vertreter: Ruckh, Rainer Gerhard

(56) Entgegenhaltungen:
- DE-A1-102006 016 913
- DE-B3-102005 026 611
- DE-U1- 20 111 588
- DE-U1- 29 907 270

## Beschreibung

Die Erfindung betrifft einen optischen Sensor gemäß dem Anspruch 1.

Derartige Sensoren weisen generell Sensorkomponenten zur Objekterfassung sowie Elektronikkomponenten zur Auswertung von Sensorsignalen der Sensorkomponenten auf, wobei mit den Elektronikkomponenten abhängig von dieser Auswertung Ausgangssignale, insbesondere Objektfeststellungssignale generiert werden. Die Objektfeststellungssignale signalisieren im einfachsten Fall, ob ein Objekt im Erfassungsbereich vorhanden ist oder nicht. Die Sensorkomponenten und die Elektronikkomponenten sind generell in einem oder mehreren Gehäusen integriert.

Derartige optische Sensoren weisen als optische Bauteile typischerweise wenigstens einen Sendelichtstrahlen emittierenden Sender mit einer zugeordneten Sendeoptik und einen Empfangslichtstrahlen empfangenden Empfänger mit einer zugeordneten Empfangsoptik auf.

Um während des Arbeitsbetriebs des optischen Sensors eine fehlerhafte Objektdetektion zu gewährleisten ist es erforderlich optische Bauteile vor Beginn des Arbeitsbetriebs zu justieren.

Ein Beispiel hierfür ist ein optischer Sensor mit einem Bildsensor, dessen Bildebene relativ zu einer Optikebene eine insbesondere in Form eines Objektivs gebildeten ausgerichtet werden muss.

Zur Durchführung einer derartigen Justage sind Justagemittel vorgesehen, mittels derer geeignete Justagebewegungen durchgeführt werden. Ein Beispiel für ein derartiges Justagemittel ist eine Schraube durch deren Betätigung Justagebewegungen durchgeführt werden. Die Durchführung einer Justagebewegung kann derart durchgeführt werden, dass das Justagemittel, insbesondere eine Schraube gegen die Federkraft einer Feder, die als Zug- oder Druckfeder ausgebildet sein kann, bewegt wird, wodurch eine Vorspannung bei der Durchführung der Justagebewegung generiert wird.

Ein Problem bei derartigen bekannten Justageeinrichtungen besteht darin, dass eine mit den Justagemitteln eingestellte Justageposition nicht stabil erhalten bleibt. Beispielsweise können sich Justagemittel in Form von Schrauben unter Einfluss mechanischer Belastungen noch selbsttätig drehen und verstellen. Auch bei den Justagemitteln zugeordneten Federn können bei mechanischen Belastungen, insbesondere Vibrationsbelastungen, insbesondere durch ihr Resonanzverhalten, Verstellungen von Justagepositionen auftreten, wodurch die Funktion des optischen Sensors beeinträchtigt wird.

Um ein derartig unerwünschtes Verstellen von Justagepositionen zu vermeiden, ist es bekannt, eine eingestellte Justageposition durch zusätzliche Elemente zu sichern, beispielsweise derart, dass nach Einstellung einer Justageposition das Justagemittel durch Aufbringen von Klebstoff gesichert wird.

Nachteilig hierbei ist, dass dies nicht nur einen zusätzlichen mechanischen Aufwand, sondern auch einen zusätzlichen weiteren Arbeitsschritt bei der Fertigung des optischen Sensors erforderlich macht, was zu einem erhöhten Kostenaufwand bei der Herstellung des optischen Sensors führt.

Die DE 10 2006 016 913 A1 betrifft einen optischen Sensor zur Erfassung von Objekten in einem Überwachungsbereich. Dieser umfasst als Optikelemente einen Sendelichtstrahlen emittierenden Sender und/oder einen Empfangslichtstrahlen empfangenden Empfänger. Diese sind innerhalb eines Gehäuses angeordnet. Ein Optikelement ist durch wenigstens ein Stellelement justierbar und das justierte Optikelement ist durch eine in das Gehäuse eingespritzte Niederdruckmasse lagefixiert, wobei die Niederdruckmasse ein Dichtmittel für das Gehäuse bildet.

Die DE 10 2005 026 611 B3 betrifft einen Sensor zur Erfassung von Objekten in einem Überwachungsbereich, mit in wenigstens einem Gehäuse integrierten Sensorkomponenten, und mit wenigstens einem beweglichen Bedienelement, zu dessen Aufnahme feststehende Komponenten am Gehäuse oder innerhalb des Gehäuses vorgesehen sind. Wenigstens ein Hohlraum ist zwischen dem Bedienelement und einer feststehenden Komponente mit einer Niederdruckspritzmasse befüllt, welche nur an der feststehenden Komponente und nicht an dem Bedienelement haftet.

Die DE 299 07 270 U1 betrifft eine Verbindungsvorrichtung für optische und/oder elektronische Bauteile, mit zumindest zwei korrespondierenden Kopplungselementen, von denen je eines an einem der zu verbindenden Bauteile anzuordnen ist und die in einer einstellbaren Relativposition zueinander fixierbar sind. Die Kopplungselemente sind mittels einer im Verarbeitungszustand fließfähigen und im Gebrauchszustand festen Masse miteinander verbunden.

Die DE 201 11 588 U1 betrifft eine Befestigungsvorrichtung für einen optischen Sensor, mit einem Sendelichtstrahlen emittierenden Sender und einem Empfangslichtstrahlen empfangenden Empfänger, wobei der Sensor in wenigstens einem Gehäuse integriert ist, welches wenigstens abschnittsweise kugelförmig ausgebildet ist, und wobei als Befestigungsmittel Aufnahmen vorgesehen sind, an welchen kugelförmige Abschnitte des Gehäuses anliegen, so dass das Gehäuse zu Justagezwecken bezüglich der Aufnahmen drehbar und in vorgegebenen Drehstellungen an diesen fixierbar ist.

Der Erfindung liegt die Aufgabe zugrunde für einen optischen Sensor mit geringem konstruktiven Aufwand eine reproduzierbare Justage bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten mit Sensorkomponenten, die zur Objektdetektion ausgebildet sind, und mit Elektronikkomponenten, die zur Auswertung von Sensorsignalen der Sensorkomponente ausgebildet sind. Die Sensorkomponenten weisen wenigstens ein optisches Bauteil auf, welchem ein Justagemittel zugeordnet sind, mittels derer Justagebewegungen des optischen Bauteils generierbar sind. Es ist wenigstens ein elastisches Element bestehend aus einem elastischen Material mit Klebeeigenschaften vorgesehen, wobei das elastische Element dem Justagemittel so zugeordnet ist, dass die Justagebewegung auf das elastische Element übertragen wird, wodurch das elastische Element bei Durchführen der Justagebewegung elastisch verformt wird, wodurch die Justagebewegung auf das elastische Element übertragen ist.

Der Grundgedanke der Erfindung besteht somit darin dem Justagemittel ein elastisches Element so zuzuordnen, dass dieses bei Durchführen von Justagebewegungen mit dem Justagemittel elastisch verformt wird, so dass die Justagebewegung auf das elastische Element übertragen ist. Die hierzu erforderliche stabile Ankopplung an das Justagemittel wird durch die Klebeeigenschaften des elastischen Elements gewährleistet.

Durch die vom elastischen Element ausgeübten Rückstellkräfte, die bei dessen elastischer Verformung generiert werden, wird eine mit dem Justagemittel eingestellte Justageposition langzeitstabil beibehalten, ohne dass es hierzu separater Fixiermittel beziehungsweise zusätzlicher Arbeitsschritte zur Fixierung der Justageposition bedarf.

Ein reproduzierbarer Justagevorgang ist dadurch gewährleistet, dass bei einer mit dem Justagemittel durchgeführten Justagebewegung das elastische Element die Justagebewegung mitführt und/oder eine Vorspannung für diese generiert.

Dies kann vorteilhaft dadurch realisiert werden, in dem das elastische Element durch eine Klebeverbindung mit dem Justagemittel verbunden ist.

Besonders vorteilhaft ist das elastische Element formschlüssig mit dem Justagemittel verbunden.

Gemäß einer vorteilhaften Weiterbildung ist ein zusätzliches elastisches Element vorgesehen, das räumlich getrennt von Justagemitteln angeordnet ist. Insbesondere ist ein weiteres elastisches Element vorgesehen, welches eine Kippachse oder einen Kipppunkt ausbildet.

Durch eine elastische Verformung werden dadurch bei Betätigen des Justagemittels Kippbewegungen des zu justierenden optischen Bauteils ermöglicht, wodurch eine Einstellung des optischen Bauteils in einer Justageposition ermöglicht wird.

Gemäß einer ersten vorteilhaften Ausführungsform besteht das oder jedes elastische Element aus einem aufgeschäumten Klebematerial.

Alternativ besteht das oder jedes elastische Element aus einem massiven Klebematerial.

Gemäß einer weiteren vorteilhaften Ausgestaltung ist das elastische Element aus einem Elastomermaterial oder einem Schaummaterial gebildet, welches einseitig oder mehrseitig klebend ausgebildet ist.

In diesen Fällen weist das elastische Element mit intrinsische Klebeeigenschaften auf, sodass das elastische Element stabil zwischen zu zueinander justierenden Elementen so angeordnet werden kann, dass Justagebewegungen des Justagemittels auf dieses elastische Element übertragen werden.

Gemäß einer weiteren Ausgestaltung ist das elastische Element von einem Schaummaterial gebildet, das im flüssigen Zustand zwischen zu justierenden Elementen eingebracht wird und dort aushärtet.

Da in diesen das elastische Element im flüssigen Zustand zwischen gegeneinander zu justierenden Elementen eingebracht wird, wird eine besonders gute Konturanpassung an diese Elemente ermöglicht.

Gemäß einer ersten vorteilhaften Ausgestaltung ist das optische Bauteil ein optoelektronisches Bauteil.

Insbesondere bildet das optoelektronische Bauteil einen Sendelichtstrahlen emittierenden Sender oder einen Empfangslichtstrahlen empfangenden Empfänger aus.

Die Sender des optischen Sensors können beispielsweise in Form von Leuchtdioden oder Laserdioden ausgebildet sein. Die Empfänger können von einzelnen Photodioden oder auch von Bildsensoren mit linearen oder matrixförmigen Anordnungen von Empfangselementen gebildet sein.

Gemäß einer zweiten vorteilhaften Ausgestaltung ist das optische Bauteil ein mechanisches Optikelement.

Insbesondere ist das mechanische Optikelement ein Kollimator, eine Linse, ein Objektiv oder ein Spiegel.

Die Erfindung wird im Folgenden anhand der Zeichnungen erläutert. Es zeigen:
- Figur 1:: Ausführungsbeispiel des optischen Sensors.
- Figur 2:: Erste Ausführungsform einer Justageanordnung für einen optischen Sensor.
- Figur 3:: Zweite Ausführungsform einer Justageanordnung für einen optischen Sensor.
- Figur 4:: Dritte Ausführungsform einer Justageanordnung für einen optischen Sensor.
- Figur 5:: Vierte Ausführungsform einer Justageanordnung für einen optischen Sensor.
- Figur 6:: Fünfte Ausführungsform einer Justageanordnung für einen optischen Sensor.

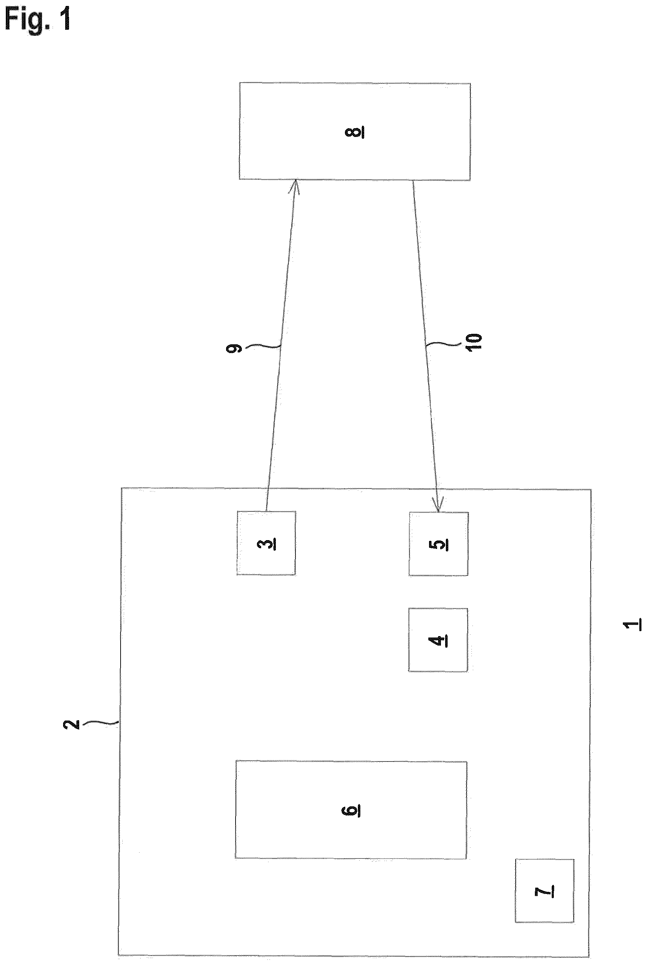

Figur 1 zeigt ein Ausführungsbeispiel des erfindungsgemäßen optischen Sensors 1. Der optische Sensor 1 weist ein Gehäuse 2 auf, in welchem sämtliche Sensorkomponenten und Elektronikkomponenten integriert sind.

Der optische Sensor 1 weist als Sensorkomponenten eine Beleuchtungseinheit 3 auf, die in Form einer Anordnung von Laserdioden gebildet sein kann, welchen eine Sendeoptik zugeordnet ist. Weiterhin weist der optische Sensor 1 als Sensorkomponenten einen Empfänger in Form eines Bildsensors 4 mit einer matrixförmigen Anordnung von Empfangselementen auf, das heißt der optische Sensor 1 bildet einen Kamerasensor aus. Der Bildsensor 4 kann von einem CCD- oder CMOS-Array gebildet sein. Dem Bildsensor 4 ist eine Empfangsoptik in Form eines Objektivs 5 vorgeordnet. Weiterhin weist der optische Sensor 1 als Elektronikkomponenten eine Steuer- und Auswerteeinheit 6 in Form eines Mikroprozessors, Controllers oder dergleichen auf. Schließlich weist der optische Sensor 1 als Elektronikkomponenten eine Schnittstelle 7 auf, über welche Signale ein- oder ausgebbar sind. Zur Detektion von Objekten 8 emittiert die Beleuchtungseinheit 3 Sendelichtstrahlen 9, die vom zu detektierenden Objekt 8 als Empfangslichtstrahlen 10 auf den Bildsensor 4 zurück reflektiert werden. Abhängig von im Bildsensor 4 generierten Empfangssignalen wird in der Steuer. Und Auswerteeinheit 6 ein Objektfeststellungssignal generiert, das über die Schnittstelle 7 ausgegeben wird.

Der optische Sensor 1 kann zur Überwachung eines Überwachungsbereichs ausgebildet sein. In diesem Fall generiert der optische Sensor 1 ein Objektfeststellungssignal in Form eines binären Schaltsignals, dessen Signalzustände angeben, ob sich ein Objekt 8 im Überwachungsbereich befindet oder nicht. Der optische Sensor 1 kann alternativ zur Objektidentifikation oder als Codeleser ausgebildet sein.

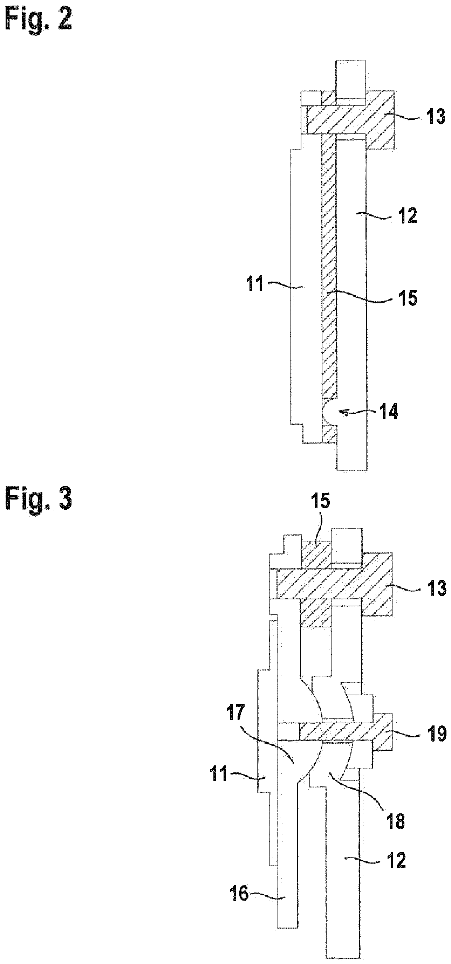

Figur 2 zeigt ein erstes Ausführungsbeispiel der erfindungsgemäßen Justageanordnung, die insbesondere bei dem optischen Sensor 1 gemäß Figur 1 eingesetzt werden kann.

Bei der Justageanordnung ist ein optisches Bauteil 11 vorgesehen, das gegenüber einem feststehenden Teil 12 auszurichten ist. Das feststehende Teil 12 kann Bestandteil des Gehäuses 2 sein oder fest mit diesem verbunden sein.

Das optische Bauteil 11 kann generell ein mechanisches Optikelement sein, beispielsweise ein Spiegel. Wird die Justageanordnung bei dem optischen Sensor 1 gemäß Figur 1 eingesetzt, kann das optische Bauteil 11 von dem Bildsensor 4 gebildet sein.

Als Justagemittel ist in vorliegendem Fall eine Stellschraube 13 vorgesehen, durch deren Betätigen das optische Bauteil 11 bezüglich einer Kippachse gekippt werden kann. Die Kippachse wird im vorliegenden Fall von einem über die ebene Stirnseite des feststehenden Teils hervorstehenden Vorsprung 14 gebildet.

Erfindungsgemäß ist dem Justagemittel ein elastisches Element 15 mit Klebeeigenschaften zugeordnet. Das elastische Element 15 ist im vorliegenden Fall zwischen dem optischen Bauteil 11 und dem feststehenden Teil 12 eingebracht und durch dessen Klebeeigenschaften an diesen fixiert. Das elastische Element 15 kann ein- oder mehrstückig ausgebildet sein.

Gemäß einer ersten Ausführungsform besteht das oder jedes elastische Element 15 aus einem aufgeschäumten Klebematerial.

Alternativ besteht das oder jedes elastische Element 15 aus einem massiven Klebematerial.

Weiterhin kann das elastische Element 15 aus einem Elastomermaterial oder einem Schaummaterial gebildet sein, welches einseitig oder mehrseitig klebend ausgebildet ist.

Schließlich kann das elastische Element 15 von einem Schaummaterial gebildet sein, das im flüssigen Zustand zwischen zu justierenden Elementen eingebracht wird und dort aushärtet.

Diese Ausbildungen sind auch bei den weiteren Ausführungsformen des elastische Element 15 gemäß den Figuren 3 - 6 möglich.

Die Funktionsweise der Justageanordnung gemäß Figur 2 ist derart, dass durch Betätigen der Stellschrauben 13 Justagebewegungen des optischen Bauteils 11 in Form von Kippbewegungen bewirkt werden. Bei diesen Kippbewegungen wird das elastische Element 15 elastisch verformt, wodurch dieses den Justagebewegungen folgt. Dadurch erfolgt eine Mitführung des elastischen Elements 15 und das elastische Element 15 generiert eine Vorspannung, die der Stellbewegung der Stellschraube 13 entgegenwirkt.

Ist durch Betätigen der Stellschraube 13 die gewünschte Justageposition erreicht, wird diese durch die formschlüssige Klebeverbindung der Stellschraube 13 mit dem elastischen Element 15 stabil beibehalten, das heißt ein unkontrolliertes, eigenständiges Verstellen der Justageposition ist ausgeschlossen.

Figur 3 zeigt ein zweites Ausführungsbeispiel der erfindungsgemäßen Justageanordnung.

In diesem Fall ist das von dem Bildsensor 4 gebildete optische Bauelement 11 auf einem Justagehalter 16 gelagert, dessen Neigungsposition gegenüber dem feststehenden Teil 12 verstellt werden kann. Das optische Bauteil 11 ist auf der vorderen Stirnseite des Justagehalters 16 gelagert. Auf der rückseitigen Stirnseite des Justagehalters 16 ist ein konvexes Lagerungssegment 17 vorgesehen, dessen Oberfläche kugelsegmentförmig ausgebildet ist. Korrespondierend hierzu ist an der vorderen, dem Justagehalter 16 zugewandten Stirnseite ein konvexes Aufnahmesegment 18 vorgesehen, dessen Kontur an die Kontur des Lagerungssegments 17 angepasst ist. Das Lagerungssegment 17 und das Aufnahmesegment 18 werden von einer Schraube 19 axial durchsetzt, die einen Kipppunkt definiert, von welchen der Justagehalter 16 gekippt werden kann.

Zwischen dem Justagehalter 16 und dem feststehenden Teil 12 ist ein elastisches Element 15 vorgesehen, das die Stellschraube 13 umgibt, wobei das elastische Element 15 eine formschlüssige Klebeverbindung mit der Stellschraube 13 bildet.

Durch Betätigen der Stellschraube 13 erfolgt eine Justagebewegung des optischen Bauteils 11, in dem der Justageschalter bezüglich des Kipppunkts gekippt wird. Das elastische Element 15 folgt dieser Bewegung durch elastische Verformung und generiert dabei eine Verspannung. Ist die Justageposition erreicht, wird diese durch das elastische Element 15 stabil gehalten, das heißt die Stellschraube 13 ist gegen ein unkontrolliertes, eigenständiges Verstellen der Justageposition gesichert.

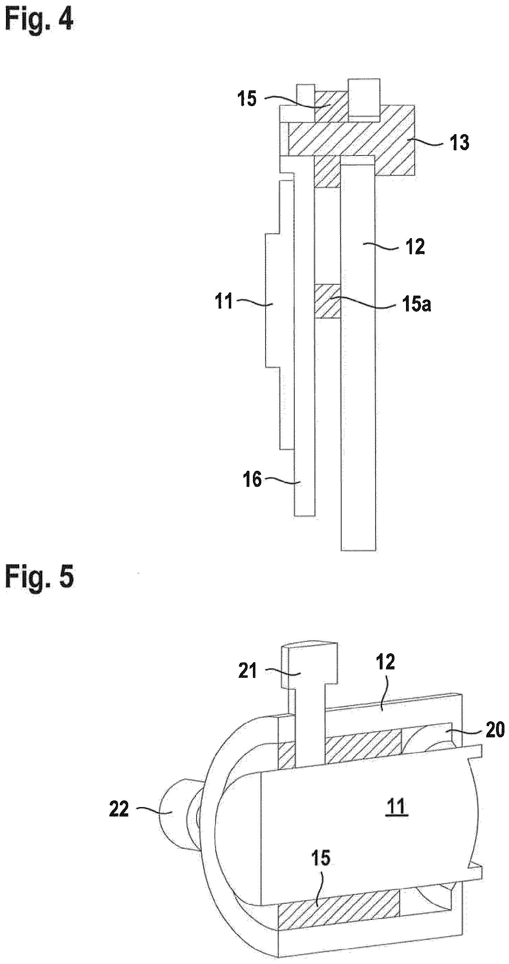

Figur 4 zeigt ein weiteres Ausführungsbeispiel der erfindungsgemäßen Justageanordnung.

Die Justageanordnung gemäß Figur 4 entspricht weitgehend der Anordnung gemäß Figur 3. Die Anordnung gemäß Figur 4 unterscheidet sich von der Anordnung gemäß Figur 3 nur dadurch, dass kein Kipppunkt, sondern eine Kipplinie vorgegeben wird, und zwar durch ein weiteres elastisches Element 15a.

Die Funktion der Justageanordnung gemäß Figur 4 entspricht der Justageanordnung gemäß Figur 3, wobei in diesem Fall auch das die Kipplinie bildende elastische Element 15a der Justagebewegung durch elastische Verformung folgt.

Figur 5 zeigt eine Weiterbildung der Justageanordnung gemäß Figur 2. Analog zur Ausführungsform gemäß Figur 2 ist zwischen dem feststehenden Teil 12 und dem optischen Bauteil 11 ein flächiges elastisches Element 15 vorgesehen. Das optische Bauteil 11 kann bezüglich einer Lagerstelle 20 am feststehenden Teil 12 gekippt werden.

Als Justagemittel sind im vorliegenden Fall zwei Einstellelemente 21, 22 vorgesehen, durch deren Betätigung das optische Bauteil 11 gekippt wird, bis eine Justageposition erreicht wird. Die Justageposition wird wieder mittels des elastischen Elements 15 stabilisiert.

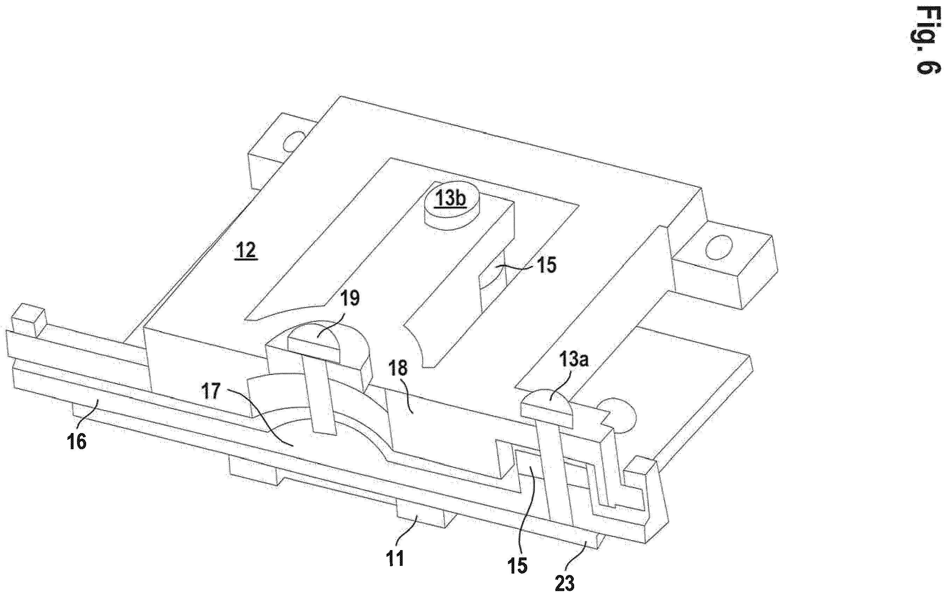

Figur 6 zeigt eine Weiterbildung der Justageanordnung gemäß Figur 3.

Am Justagehalter 16 ist eine Leiterplatte 23 befestigt, auf welcher der das optische Bauteil 11 bildende Bildsensor 4 gelagert ist.

Zur Ausbildung eines Kipppunkts ist an der Rückseite der Justageanordnung wieder das Lagerungssegment 17 vorgesehen. Korrespondierend hierzu ist an der dem Justagehalter 16 zugewandten Vorderseite das Aufnahmesegment 18 vorgesehen. Der Kipppunkt wird wieder durch die das Lagerungssegment 17 und das Aufnahmesegment 18 durchsetzende Schraube 19 gebildet.

Als Justagemittel sind im vorliegenden Fall zwei bezüglich des Kipppunkts nur 90° versetze Stellschrauben 13a, 13b vorgesehen. Jede Stellschraube 13 ist im Bereich zwischen dem feststehenden Teil 12 und dem Justagehalter 16 mit einem elastischen Element 15 umgeben.

Mit den Stellschrauben 13 kann jeweils in einer Raumrichtung das optische Bauteil 11 gegenüber dem feststehenden Teil 12 gekippt werden. Die auf diese Weise eingestellte Justageposition wird wieder mit den elastischen Elementen 15 stabilisiert.

### Bezugszeichenliste

- (1): optischer Sensor
- (2): Gehäuse
- (3): Beleuchtungseinheit
- (4): Bildsensor
- (5): Objektiv
- (6): Auswerteeinheit
- (7): Schnittstelle
- (8): Objekt
- (9): Sendelichtstrahl
- (10): Empfangslichtstrahl
- (11): optisches Bauteil
- (12): feststehendes Teil
- (13): Stellschraube
- (13a): Stellschraube
- (13b): Stellschraube
- (14): Vorsprung
- (15): elastisches Element
- (15a): elastisches Element
- (16): Justagehalter
- (17): Lagerungssegment
- (18): Aufnahmesegment
- (19): Schraube
- (20): Lagerstelle
- (21): Einstellelement
- (22): Einstellelement
- (23): Leiterplatte

## Patentansprüche

1. Optischer Sensor (1) zur Erfassung von Objekten mit Sensorkomponenten, die zur Obj ektdetektion ausgebildet sind, und mit Elektronikkomponenten, die zur Auswertung von Sensorsignalen der Sensorkomponenten ausgebildet sind, wobei der optische Sensor (1) Justagemittel und wenigstens ein elastisches Element (15) bestehend aus einem Material mit Klebeeigenschaften aufweist, wobei die Sensorkomponenten wenigstens ein optisches Bauteil (11) aufweisen, welchem die Justagemittel zugeordnet sind, mittels derer Justagebewegungen des optischen Bauteils (11) generierbar sind, wobei das elastische Element (15) dem Justagemittel so zugeordnet ist, dass die Justagebewegung auf das elastische Element (15) übertragen wird, wodurch das elastische Element (15) bei Durchführen der Justagebewegung elastisch verformt wird.

2. Optischer Sensor (1) nach Anspruch 1, **dadurch gekennzeichnet, dass** das elastische Element (15) durch eine Klebeverbindung mit dem Justagemittel verbunden ist.

3. Optischer Sensor (1) nach Anspruch 2, **dadurch gekennzeichnet, dass** das elastische Element (15) formschlüssig mit dem Justagemittel verbunden ist.

4. Optischer Sensor (1) nach einem der Ansprüche 1 - 3, **dadurch gekennzeichnet, dass** eine mit dem Justagemittel eingestellte Justageposition mittels des elastischen Elements (15) selbsttätig fixiert ist.

5. Optischer Sensor (1) nach einem der Ansprüche 1 - 4, **dadurch gekennzeichnet, dass** bei einer mit dem Justagemittel durchgeführten Justagebewegung das elastische Element (15) die Justagebewegung mitführt und/oder eine Vorspannung für diese generiert.

6. Optischer Sensor (1) nach einem der Ansprüche 1 - 5, **dadurch gekennzeichnet, dass** ein weiteres elastisches Element (15) vorgesehen ist, welches eine Kippachse oder einen Kipppunkt ausbildet.

7. Optischer Sensor (1) nach einem der Ansprüche 1 - 6, **dadurch gekennzeichnet, dass** das oder jedes elastische Element (15) aus einem aufgeschäumten Klebematerial besteht.

8. Optischer Sensor (1) nach einem der Ansprüche 1 - 6, **dadurch gekennzeichnet, dass** das oder jedes elastische Element (15) aus einem massiven Klebematerial besteht.

9. Optischer Sensor (1) nach einem der Ansprüche 1 - 6, **dadurch gekennzeichnet, dass** das elastische Element (15) aus einem Elastomermaterial oder einem Schaummaterial gebildet ist, welches einseitig oder mehrseitig klebend ausgebildet ist.

10. Optischer Sensor (1) nach einem der Ansprüche 1 - 6, **dadurch gekennzeichnet, dass** das elastische Element (15) von einem Schaummaterial gebildet ist, das im flüssigen Zustand zwischen zu justierenden Elementen eingebracht wird und dort aushärtet.

11. Optischer Sensor (1) nach einem der Ansprüche 1 - 10, **dadurch gekennzeichnet, dass** das optische Bauteil (11) ein optoelektronisches Bauteil ist.

12. Optischer Sensor (1) nach Anspruch 11, **dadurch gekennzeichnet, dass** das optoelektronische Bauteil einen Sendelichtstrahlen (9) emittierenden Sender oder einen Empfangslichtstrahlen (10) empfangenden Empfänger ausbildet.

13. Optischer Sensor (1) nach einem der Ansprüche 1 - 10, **dadurch gekennzeichnet, dass** das optische Bauteil (11) ein mechanisches Optikelement ist.

14. Optischer Sensor (1) nach Anspruch 13, **dadurch gekennzeichnet, dass** das mechanische Optikelement ein Kollimator, eine Linse, ein Objektiv (5) oder ein Spiegel ist.

## Claims

1. An optical sensor (1) for detecting objects, having sensor components which are designed for object detection, and having electronic components which are designed for evaluating sensor signals of the sensor components, the optical sensor (1) having adjustment means and at least one elastic element (15) consisting of a material with adhesive properties, the sensor components having at least one optical component (11) with which the adjustment means are associated, by means of which adjustment movements of the optical component (11) can be generated, the elastic element (15) being associated with the adjustment means in such a way that the adjustment movement is transmitted to the elastic element (15), as a result of which the elastic element (15) is elastically deformed when the adjustment movement is carried out.

2. An optical sensor (1) according to claim 1, **characterised in that** the elastic element (15) is connected to the adjustment means by an adhesive connection.

3. An optical sensor (1) according to claim 2, **characterised in that** the elastic element (15) is connected to the adjustment means in a form-fitting manner.

4. An optical sensor (1) according to one of claims 1 to 3, **characterised in that** an adjustment position set with the adjustment means is automatically fixed by means of the elastic element (15).

5. An optical sensor (1) according to one of the claims 1 to 4, **characterised in that**, during an adjustment movement carried out by the adjustment means, the elastic element (15) accompanies the adjustment movement and/or generates a preload for it.

6. An optical sensor (1) according to one of the claims 1 to 5, **characterised in that** a further elastic element (15) is provided, which forms a tilting axis or a tilting point.

7. An optical sensor (1) according to one of the claims 1 to 6, **characterised in that** said or each elastic element (15) consists of a foamed-on adhesive material.

8. An optical sensor (1) according to one of the claims 1 to 6, **characterised in that** said or each elastic element (15) consists of a solid adhesive material.

9. An optical sensor (1) according to one of the claims 1 to 6, **characterised in that** the elastic element (15) is formed from an elastomer material or a foam material which is adhesive on one side or on several sides.

10. An optical sensor (1) according to one of the claims 1 to 6, **characterised in that** the elastic element (15) is formed by a foam material which is introduced in the liquid state between elements to be adjusted and hardens there.

11. An optical sensor (1) according to any one of claims 1 to 10, **characterised in that** the optical component (11) is an optoelectronic component.

12. An optical sensor (1) according to claim 11, **characterised in that** the optoelectronic component forms a transmitter emitting transmitted light beams (9) or a receiver receiving received light beams (10).

13. An optical sensor (1) according to any one of claims 1 to 10, **characterised in that** the optical component (11) is a mechanical optical element.

14. An optical sensor (1) according to claim 13, **characterised in that** the mechanical optical element is a collimator, a lens, an objective (5) or a mirror.

## Revendications

1. Capteur optique (1) pour la détection d'objets, comprenant des composants de capteur qui sont conçus pour la détection d'objets, et comprenant des composants électroniques qui sont conçus pour évaluer les signaux de capteur des composants de capteur, le capteur optique (1) comprenant des moyens de réglage et au moins un élément élastique (15) constitué d'un matériau comprenant des propriétés adhésives, les composants de capteur comprenant au moins un composant optique (11) avec lequel les moyens de réglage sont associés, à l'aide desquels des mouvements de réglage du composant optique (11) peuvent être générés, l'élément élastique (15) étant associé aux moyens de réglage de telle sorte que le mouvement de réglage est transmis à l'élément élastique (15), ce qui entraîne une déformation élastique de l'élément élastique (15) lors de l'exécution du mouvement de réglage.

2. Capteur optique (1) selon la revendication 1, **caractérisé par le fait que** l'élément élastique (15) est relié au moyen de réglage par une liaison adhésive.

3. Capteur optique (1) selon la revendication 2, **caractérisé par le fait que** l'élément élastique (15) est relié au moyen de réglage de manière à s'adapter à la forme.

4. Capteur optique (1) selon l'une des revendications 1 à 3, **caractérisé par le fait qu'**une position de réglage définie par le moyen de réglage est automatiquement fixée au moyen de l'élément élastique (15).

5. Capteur optique (1) selon l'une des revendications 1 à 4, **caractérisé en ce que**, lors d'un mouvement de réglage effectué par les moyens de réglage, l'élément élastique (15) accompagne le mouvement de réglage et/ou génère une précharge pour celui-ci.

6. Capteur optique (1) selon l'une des revendications 1 à 5, **caractérisé par** la présence d'un autre élément élastique (15) qui forme un axe de basculement ou un point de basculement.

7. Capteur optique (1) selon l'une des revendications 1 à 6, **caractérisé par le fait que** ledit ou chaque élément élastique (15) est constitué d'un matériau adhésif expansé.

8. Capteur optique (1) selon l'une des revendications 1 à 6, **caractérisé par le fait que** ledit ou chaque élément élastique (15) est constitué d'un matériau adhésif solide.

9. Capteur optique (1) selon l'une des revendications 1 à 6, **caractérisé en ce que** l'élément élastique (15) est formé d'un matériau élastomère ou d'une mousse adhésive sur une ou plusieurs faces.

10. Capteur optique (1) selon l'une des revendications 1 à 6, **caractérisé par le fait que** l'élément élastique (15) est formé par un matériau en mousse qui est introduit à l'état liquide entre les éléments à ajuster et y durcit.

11. Capteur optique (1) selon l'une des revendications 1 à 10, **caractérisé par le fait que** le composant optique (11) est un composant optoélectronique.

12. Capteur optique (1) selon la revendication 11, **caractérisé par le fait que** le composant optoélectronique forme un émetteur émettant des faisceaux lumineux transmis (9) ou un récepteur recevant des faisceaux lumineux reçus (10).

13. Capteur optique (1) selon l'une des revendications 1 à 10, **caractérisé par le fait que** le composant optique (11) est un élément optique mécanique.

14. Capteur optique (1) selon la revendication 13, **caractérisé par le fait que** l'élément optique mécanique est un collimateur, une lentille, un objectif (5) ou un miroir.
